# EUROPEAN PATENT APPLICATION

(11) **EP 1 870 492 A1**
(43) Date of publication of application: **26.12.2007**
(21) Application number: 07109953.5
(22) Date of filing: 11.06.2007
(51) Int. Cl.: C23C 22/03, C23C 22/78, F01D 5/28, F01D 25/00

(54) **Metal phosphate coating for oxidation resistance**

(30) Priority: 21.06.2006 US 425596
(71) Applicant: General Electric Company, Schenectady, NY 12345 (US)
(72) Inventor: Darolia, Ramgopal, West Chester, OH 45069 (US); Hazel, Brian Thomas, West Chester, OH 45069 (US); Skoog, Andrew J., West Chester, OH 45069 (US)
(74) Representative: Szary, Anne Catherine

(57) **Abstract**

A high pressure turbine component (10) for use in a gas turbine engine and a method for coating a high pressure turbine component (10). The gas turbine engine turbine component is coated with an amorphous phosphate-containing coating (52) disposed on a surface (26) of the component (10). The coating (52) has a thickness of from about 0.10 microns to about 10 microns and provides resistance to oxidation and hot corrosion at temperatures greater than about 1000 °F.

## Description

### FIELD OF THE INVENTION

The present invention relates generally to coatings for turbine components in gas turbine engines. In particular, the present invention includes coatings for interior and under platform areas of the high pressure turbine airfoils of a gas turbine engine.

### BACKGROUND OF THE INVENTION

The operating temperature within a gas turbine engine is both thermally and chemically hostile. Significant advances in high temperature capabilities have been achieved through the development of iron, nickel and cobalt-based superalloys and the use of environmental coatings capable of protecting superalloys from oxidation, hot corrosion, etc., but coating systems continue to be developed to improve the performance of the materials.

In the compressor portion of an aircraft gas turbine engine, atmospheric air is compressed to 10-25 times atmospheric pressure, and adiabatically heated to 800° - 1250°F in the process. This heated and compressed air is directed into a combustor, where it is mixed with fuel. The fuel is ignited, and the combustion process heats the gases to very high temperatures, in excess of 3000°F (1650°C). These hot gases pass through the turbine, where airfoils fixed to rotating turbine disks extract energy to drive the fan and compressor of the engine, and the exhaust system, where the gases supply thrust to propel the aircraft. To improve the efficiency of operation of the aircraft engine, combustion temperatures have been raised. Of course, as the combustion temperature is raised, steps must be taken to prevent thermal degradation of the materials forming the flow path for these hot gases of combustion.

Aircraft gas turbine engines have a so-called High Pressure Turbine (HPT) to drive the compressor. The HPT is located immediately aft of the combustor in the engine layout and experiences the highest temperature and pressure levels (nominally - 3000° F (1850°C) and 300 psia, respectively) developed in the engine. The HPT also operates at very high rotational speeds (10,000 RPM for large high-bypass turbofans, 50,000 for small helicopter engines). There may be one or two stages of airfoils in the HPT. In order to meet life requirements at these levels of temperature and pressure, HPT components are air-cooled and are constructed from high-temperature superalloys.

The requirements for enhanced performance continue to increase for newer engines and modifications of proven designs, as higher thrusts and better fuel economy are among the performance demands. To improve the performance of engines, the combustion temperatures have been raised to very high temperatures. This can result in higher thrusts and/or better fuel economy. These combustion temperatures have become sufficiently high that even superalloy components not within the combustion path have been subject to degradation. These superalloy components have been subject to degradation by mechanisms not previously generally experienced, creating previously undisclosed problems that must be solved.

In addition to the use of thermal barrier coating (TBC) performance on the exterior surface of the turbine blade, turbine airfoils generally use film cooling in which relatively cooler air is forced through cooling passages in the airfoils. Although, the air within the cooling passages is relatively cool with respect to the combustion gas path, the superalloy walls forming the cooling passage are hot due to heat transfer from the exterior surface of the turbine blade that may or may not include a thermal barrier coating. The internal cooling passage metal temperature often reach temperatures only 100°F less than the exterior metal temperature. These internal cooling passages may include diffusion coatings, such as aluminide coatings for environmental protection. In addition, the internal surfaces are not accessible to many types of coating application techniques, such as those employing line-of-sight deposition processes. Additionally, the internal surfaces are subjected to a significantly different service environment than the external surfaces.

The external surfaces experience hot corrosion, hot oxidation, and erosion in the combustion gas. On the other hand, a flow of bleed air from the engine compressor, not combustion gas, is passed through the internal passages, and the internal surfaces are at a lower temperature than the external surfaces. The internal surfaces are subject to oxidation at a range of temperatures. The dovetail region of the internal surfaces see oxidation at temperatures as low as about 1000°F while the regions near the tip of the airfoil will see temperatures up to about 1900°F. The internal surfaces are additionally subjected to hot corrosion conditions. The bleed air for cooling includes ingested particulates such as dirt, volcanic ash, fly ash, concrete dust, sand and sea salt, as well as metal, sulfates, sulfites, chlorides, carbonates, various and sundry oxides and/or various salts in either particulate or gaseous form. It should be noted that the corrosion products are not the result of exposure of the engine components to the hot gases of combustion, normally associated with oxidation and corrosion products from contaminants in the fuel. These materials are deposited on substrate surfaces. The presence of the combination of salts and/or other contaminants at a temperature in the range of about 1300°F, a typical temperature for the internal surfaces near the dovetail region of the turbine blade, may lead to severe corrosion resulting in the formation of fatigue cracks on the internal surfaces. Additionally, hot corrosion may occur at internal locations closer to the turbine blade tip of the airfoil section where the internal wall temperature is greater. The internal surfaces of the gas turbine components are thus subjected to environmental damage of a type substantially different from that experienced on the external surfaces.

In addition to the internal surfaces of the turbine blade, pitting of turbine disks, seals and other components that are supplied with bleed air may also take place. Although the materials used in turbine engines are typically selected based on high temperature properties, including their ability to resist oxidation and corrosion, these will still degrade under severe conditions, including those conditions experienced by those exposed to the airflow used for cooling at elevated temperatures for long periods of time. It should be noted that the corrosion products are not the result of exposure of the engine components to the hot gases of combustion, normally associated with oxidation and corrosion products from contaminants in the fuel.

Because the corrosion products are the result of exposure of the engine components to cooling air and contaminants drawn from varying outdoor environments, it is not uniform from engine to engine as aircraft visit different geographic locations with different and distinct atmospheric conditions. For example, some aircraft are regularly exposed to salt water environments, while others regularly may be subject to air pollutants from highly industrial regions. A variety of coatings have been developed to mitigate corrosion concerns.

Components formed from iron, nickel and cobalt-based superalloys cannot withstand long service exposures if located in certain sections of a gas turbine engine, such as the LPT and HPT sections. A common solution is to provide such components with an environmental coating of diffusion aluminide. These coatings are generally formed by such methods as diffusing aluminum deposited by chemical vapor deposition (CVD), slurry coating, pack cementation, above-the-pack (ATP), or vapor (gas) phase aluminide (VPA) deposition into the superalloy. During high temperature exposure in air, a thin protective aluminum oxide (alumina) scale or layer that inhibits oxidation of the diffusion coating and the underlying substrate forms over the additive layer. While providing good protection against oxidation and hot corrosion, the diffusion aluminide suffers from some drawbacks when applied to the internal surfaces of the turbine blade and the under-platform portion of the turbine section. First, the diffusion aluminide coating of the complex internal surfaces of the turbine blade is difficult to apply, requiring specialized equipment, and complicated processing. In addition, aluminide coatings and their alumina scale increase the centrifugal load, which increases stresses present in the blade. Further still, the aluminide coating could have a detrimental effect on the mechanical properties of the underlying turbine blade. For example, the aluminide coating can reduce the fatigue life of the substrate at temperatures below its ductile to brittle transition temperature (DBTT) on which the coating is deposited. At lower operating temperatures, below the DBTT, aluminide coatings have minimal ductility that may be less than the local operating strains of the component. This lack of ductility could lead to cracks in the internal coating during operation, which may propagate under further loading. In order to minimize this drawback, the thickness of aluminide coatings are generally maintained below about 1.5 mils (about 38.1 microns). Due to the complex nature of the internal cooling passages of a turbine blade, thickness control of an aluminide coating is difficult. When maintaining an aluminide coating thickness to less than 1.5 mils for maximum fatigue life, certain regions of the internal passages may yield less than 0.5mils of coating and as little as no measurable coating thickness. Thinner coatings generally do not provide the desired level of protection.

Without the deposition of an oxidation and/or hot corrosion resistant coating into the internal cooling sections of the high pressure turbine blade, the operable life of the component may be severely limited. In these instances, wall consumption in the tip region of the airfoil section of a high pressure turbine blade, resulting from base metal oxidation, and/or cracking in the dovetail region of a high pressure turbine blade, resulting from corrosion initiated fatigue, may occur wherein the aluminide coating is not present.

What is needed is a coating system that provides the interior surfaces of turbine blades and other surfaces that come into contact with cooling air with resistance to oxidation and hot corrosion, which does not substantially affect the properties of the turbine blade, is easily applied to surfaces, such as the interior surfaces of a substrate material and does not detrimentally interact and impact the coating or coatings applied to the exterior of the turbine blade. The present invention provides this advantage as well as other related advantages.

### SUMMARY OF THE INVENTION

The present invention includes a high pressure turbine component for use in a gas turbine engine and a method for coating a high pressure turbine component. The gas turbine engine turbine component is coated with an amorphous phosphate-containing coating disposed on a surface of the component. The coating has a thickness of from about 0.10 microns to about 10 microns. Typical thickness is 100-200nm per application and can be applied in multiple layers to achieve the required thickness. The coating provides resistance to oxidation and hot corrosion at temperature greater than about 1000°F (about 538°C).

The present invention also includes a method for coating a high pressure turbine engine component. The method includes providing a high pressure turbine component and contacting a surface of the component with a mixture comprising an amorphous phosphate-containing coating compound precursor. Thereafter, the mixture is cured at a temperature sufficient to convert the mixture to an amorphous phosphate-containing coating that is at least partially amorphous. The cured coating has a thickness of from about 0.10 microns to about 10 microns and provides resistance to oxidation and hot corrosion at temperatures greater than about 1000°F (about 538°C).

An advantage of the present invention is that the coating of the present invention is easily applied to a variety of surfaces, including interior surfaces of turbine blades and surfaces within the high pressure turbine that contact cooling air.

Another advantage of the present invention is that the coating of the present invention is thin and has a low density that does not appreciably add to the centrifugal stress experienced by the turbine blade.

Yet another advantage is that the coating of the present invention may be applied to an entire turbine blade without the need for masking without detrimentally impacting the performance of the exterior surface. Yet another advantage is that the coating of the present invention may be applied to an entire turbine blade with the use of simple masking methods.

Yet another advantage of the present invention is that surfaces provided with the coating of the present invention may omit aluminide coatings, allowing substrates to retain mechanical properties.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 is a perspective view of a turbine blade according to an embodiment of the present invention.
FIG. 2 is a cutaway view of a turbine blade according to an embodiment of the present invention.
FIG. 3 is an enlarged view of a coating system according to the present invention.
FIG. 4 is an enlarged view of a coating system according to an alternate embodiment of the present invention.

Wherever possible, the same reference numbers are used throughout the drawings to refer to the same or like parts.

### DETAILED DESCRIPTION OF THE INVENTION

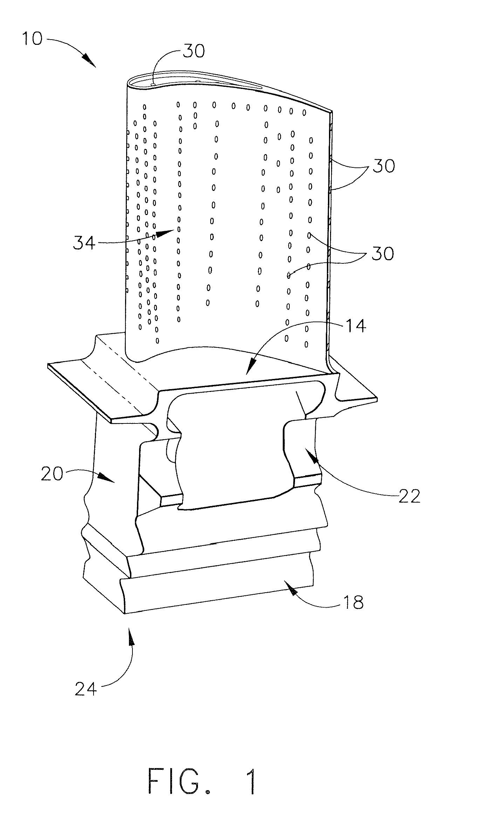

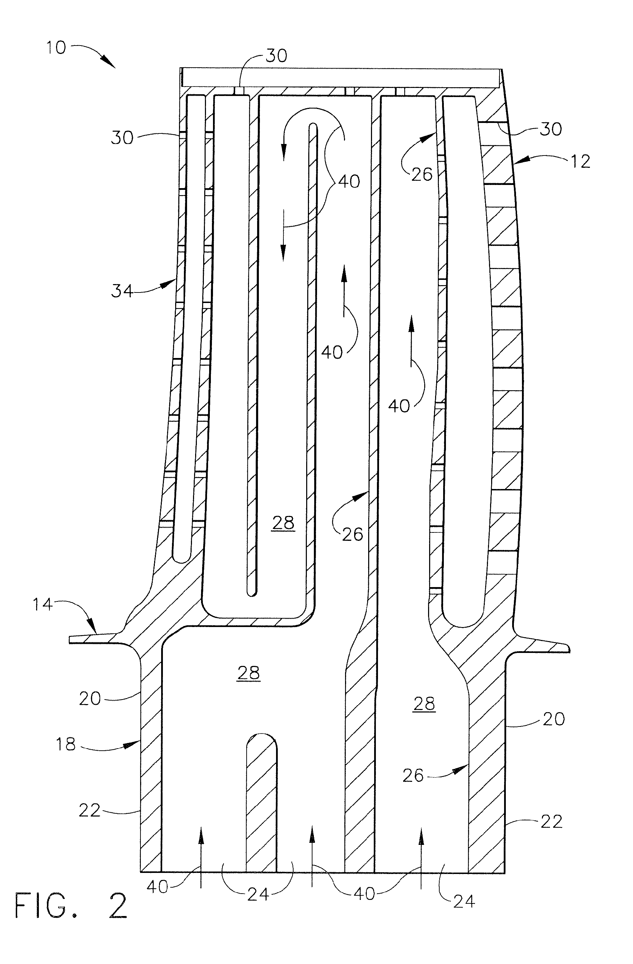

One embodiment of a turbine component that can be used with the method of the present invention includes turbine blade 10 shown in FIG. 1 and 2. As is known in the art, the turbine blade 10 has three sections: an airfoil section 34, a platform section 14, and a dovetail section 20. The airfoil section includes a plurality of cooling holes 30, which permit cooling air to escape from an interior space of the turbine blade 10. There are two portions to the exterior dovetail surface, the shank 22 and the root portion 18, which includes the dovetails for engagement with the turbine disk. At one end of the root portion 18, cooling intake passages 24 allow cooling air to enter the interior space of the turbine blade 10 for purposes of cooling. The turbine blade 10 is typically fabricated from an environmental resistant alloy, such as a nickel-based superalloy. The exterior surface of the turbine blade 10 may be coated with any coating system known in the art for coating a turbine blade 10. A known coating system includes a bond coat on the surface of the turbine blade 10, typically comprising a diffusion aluminide or an overlay MCrAlY, and a thermal barrier layer disposed on the bond coating, which may include ceramic materials, such as yttria stabilized zirconia. The bond coating and thermal barrier layer are typically applied to an external surface of the airfoil portion 34 of the turbine blade 10 where resistance to oxidation from heat is important.

FIG. 2 shows a cutaway view of the turbine blade 10 of FIG. 1, wherein a plurality of interior cooling passageway surfaces 26 define a plurality of interior cooling passageways 28, which serve to keep the blade 10 cool during normal engine operation as cooling air from the external source. A typical source of cooling air is air from the compressor section of the gas turbine engine. The cooling air 40 is introduced into the passageways 28 via air intake passages 24. The cooling air 40 flows through the interior cooling passageways 28 and exits the turbine blade through cooling holes 30, which provide film cooling to the blade surface. In order to provide resistance to oxidation and hot corrosion, the interior surfaces 26 of the turbine blade 10 may optionally be coated with an environmental resistant layer. One type of environmental resistant layer that may be applied to interior surface 26 is a diffusion aluminide coating. The present invention provides an amorphous phosphate-containing coating 52 on interior surface 26 or an amorphous phosphate-containing coating 52 on at least a portion of an environmentally resistant layer.

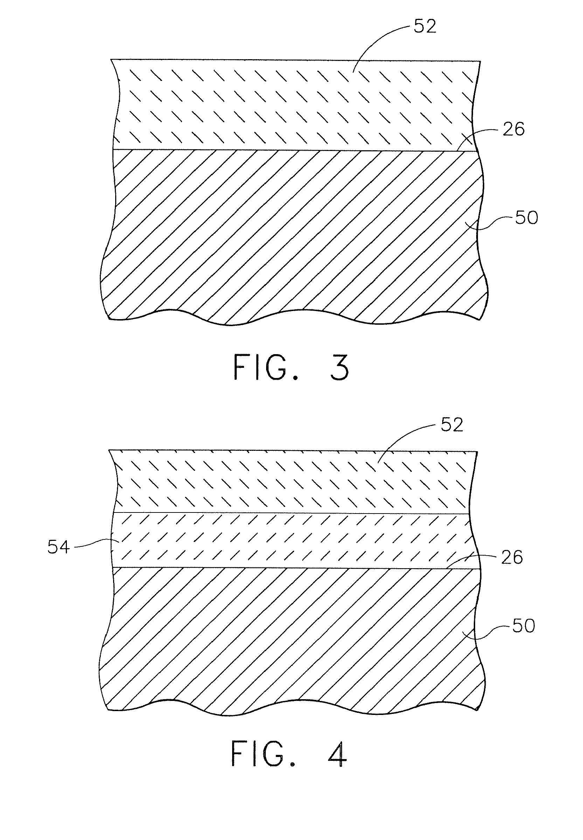

FIG.3 shows an exploded view of a coating system according to the present invention disposed on interior surface 26 of a substrate article. Interior surface 26 is the surface of alloy 50, which forms the metallic portion of the turbine blade 10. A suitable alloy composition for alloy 50 includes a nickel-based superalloy. Suitable alloy may include RENE^{®} N5, having a composition that is well-known in the art, including a nominal composition of, by weight percent, 7.5 Co, 7.0 Cr, 6.2 Al, 6.5 Ta, 5.0 W, 3.0 Re, 1.5 Mo, 0.05 C, 0.15 Hf, 0.01 Y, 0.004 B, the balance nickel and incidental impurities, but any other turbine blade alloy known in the art may be used. RENE^{®} is a trademark of Teledyne Industries, Inc., Los Angeles, CA for superalloy metals. Disposed on surface 26 is amorphous phosphate-containing coating 52. Surface 26 is preferably uniformly coated with an amorphous phosphate-containing coating 52 in order to provide oxidation and hot corrosion resistance.

FIG. 4 shows an exploded view of a coating system according to the present invention including disposed on interior surface 26. As shown in FIGs. 3 and 4, interior surface 26 is the surface of alloy 50, which forms the metallic portion of the turbine blade 10. Environmental resistant layer 54 is disposed on surface 26. Environmental resistant layer 54 may be any environmental resistant layer 54 that may be applied to the interior surface 26 of a turbine blade 10. One suitable environmental resistant layer 54 includes an aluminide coating. Disposed on surface 26 and over environmental resistant layer 54 is amorphous phosphate-containing coating 52.

The amorphous phosphate-containing coating 52 preferably has a thickness of from about 0.10 microns to about 10 microns and provides resistance to oxidation and hot corrosion at temperature greater than about 1000°F, including temperatures of about 1000°F to about 2000°F. In addition, the amorphous phosphate-containing coating provides a barrier to oxygen diffusion. The barrier preferably provides sufficient resistance to oxygen diffusivity that the amorphous phosphate-containing coating 52 has an oxygen diffusivity of less than about 1 x 10⁻¹² cm²/sec at temperatures of about 1400°C (2552°F). The reduced oxygen diffusivity of the amorphous phosphate-containing coating 52 allows for slow oxide scale growth and a fast transition from metastable aluminum oxide phases, such as theta or gamma, to the stable alpha aluminum oxide phase. The amorphous phosphate-containing coating 52 is also resistant and acts as a barrier to hot corrosion from deposited metal, sulfates, sulfites, chlorides, carbonates, various and sundry oxides and/or various salts in either particulate or gaseous form. The amorphous phosphate-containing coating 52 of the present invention, while adherent to the surface, is thin and compliant making it resistant to cracking under stress.

While the above has been described with respect to turbine blades, turbine vanes, seals, substrates such as under-platform components, turbine disks, shafts and other turbine components that come into contact with cooling air may also be coated with the amorphous phosphate-containing coating of the present invention.

The present invention also includes a method for coating the interior surfaces of a turbine blade and for coating hot section turbine component surfaces that come into contact with the cooling air of a gas turbine engine. The method includes providing a high pressure turbine component that comes into contact with cooling air within the gas turbine engine. The component may include underlying layers within the interior surfaces, such as aluminide layers, as well as exterior coating systems, not to be limited by, including diffusion alumindes, noble metal-modified diffusion aluminides, NiAl or MCrAIY overlays, and thermal barrier coatings. An optional surface preparation may be performed to clean the surface in preparation for coating. The surface preparation may be any surface preparation known in the art suitable for preparing a surface for subsequent coating. Thereafter, a liquid coating composition is provided including a liquid composition comprising a composition for forming amorphous phosphate-containing coating 52. An amorphous phosphate-containing coating 52 for use in the coating system of the present invention includes, but is not limited to an aluminophosphate coating, formed from a liquid mixture comprising a metal salt, alcohol and phosphorous pentoxide (P₂O₅). Aluminophosphate compounds for use in the amorphous phosphate-containing coating 52, compositions for forming an aluminophosphate amorphous coating and/or materials making up the coating composition for forming an aluminophosphate coating, are disclosed in U.S. Pat. Nos. 6,036,762 and 6,461,415 and U.S. Pat. Application Publications US 2006/0057407, US 2005/0106384, US 2004/0206267, US 2004/0011245 and 2003/0138673 which are incorporated by reference herein in their entirety. Examples of aluminumophospate coatings including compositions comprising amorphous, metastable aluminum phosphate having phosphate (e.g., PO₄) and aluminum oxide compounds (e.g., AlO₄) bonded within the amorphous coating. The application of the coating composition may take place using any conventional application method, including, but not limited to, injection, brushing, rolling, dipping, injecting, spin-coating, spraying and combinations thereof. In order to provide coating in selected areas, masking of the surface may be utilized. Masking may be useful in preventing coating of areas such as the exterior surfaces and dovetail pressure faces of the turbine blade.

The coated component is then dried and heated to cure the coating composition and form the amorphous phosphate-containing coating. The temperature curing is preferably greater than about 400°C (752°F), more preferably greater than about 600°C (1112°F) and still more preferably from about 500°C (932°F) to about 800°C (1472°F). The cured amorphous phosphate-containing coating 52 is adherent to the surface, has a thickness of from about 0.10 microns to about 10 microns, specifically, from about 0.1 microns to about 5 microns, more specifically from about 0.2 microns to about 2.0 microns, and is resistant to oxygen diffusion. In a preferred embodiment, the internal passages of a turbine blade 10 are coated with an amorphous phosphate-containing coating 52 comprising aluminophosphate.

In order to provide the amorphous-containing coating 52 in desired locations, while allowing other surfaces to remain uncoated, masking may be utilized. Masking includes covering a surface with a material or coating that may subsequently and substantially be removed and prevents coating of the underlying substrate. Suitable masking materials include, but are not limited to, masking tapes which may be applied at room temperature and removed from the substrate surface after applying the amorphous phosphate-containing coating 52. For example, the coating method of the present invention has the advantage that the coating may be applied to only the internal surface of the turbine blade 10 with the use of masking. Prior to the coating material being applied to the turbine blade at room temperature, simple masking methods including masking tape, releasable coatings and inert films may be applied to areas of turbine blade that do not require/desire coating including the external surface of the airfoil, the contact points with the disk of the dovetail, contact points with dampers, and over other coatings. The component may then be immersed (i.e., dipped) in an amorphous phosphate-containing coating precursor containing liquid composition. Following the precursor application and drying, the masking material can be removed before curing at elevated temperature to form the coating.

Optionally, the coating method of the present invention has the advantage that the coating may be applied to the interior surface of a turbine blade 10 without the use of masking. For example, the component may be immersed (i.e., dipped) in liquid phosphate coating precursor containing liquid composition and subsequently cured to form a coating on the entire surface of the turbine blade 10. The relatively thin low density coating has little or no detrimental effect on weight and provides properties, such as resistance to oxygen diffusion, that provide hot corrosion and oxidation resistance. Although not required on exterior surfaces having an aluminide coating and thermal barrier coating, the amorphous phosphate-containing coating 52 may be present on all surfaces of the turbine blade 10, including the exterior surfaces of the airfoil section 34 and coatings present thereon. In the embodiment wherein the entire blade, including the interior surfaces, are coated, adherence to coated surfaces, such as thermal barrier coatings on the airfoil section 34 may be weak and the amorphous phosphate-containing coating 52 may wear away during normal operation of the gas turbine engine. Additionally in the embodiment wherein the entire blade, including the interior surfaces, are coated, contact surfaces that are subject to high wear rates, such as the contact points with the disk of the dovetail or the contact points with blade dampers, will wear through the coating 52 early during operation of the gas turbine engine and not affect the performance of these contact surfaces. The remaining portions of the turbine blade 10 remain coated and the amorphous phosphate-containing coating 52 provides oxidation and hot corrosion resistance.

### EXAMPLE

Two samples of RENE^{®} N5 were provided. The first sample was coated with an amorphous phosphate-containing coating according to the present invention. A second, comparative sample was left uncoated. Both the first sample and comparative sample were subject to oxidation testing with 20 cycles per hour in a Mach 1 gas stream at 2150 °F, where the samples were allowed to be cooled to about room temperature between cycles. The weight loss of the sample in grams was measured and are show in TABLE As shown in TABLE 1, the alloy coated with amorphous phosphate-containing coating had substantially greater resistance to oxidation than the uncoated material as evidence by the initiation of material weight loss at a longer test time (about 824 hours versus about 371 hours).

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

**TABLE 1**

| Example 1 - N5 Alloy Coated with Amorphous Phosphate-Containing Coating | | | Comparative Example - Uncoated N5 Alloy | |
|---|---|---|---|---|
| Time(hrs) | Weight Gain (grams) | | Time (hrs) | Weight Gain (grams) |
| 0 | 0.0000 | | 0 | 0.0000 |
| 40 | 0.0024 | | 40 | 0.0026 |
| 81 | 0.0030 | | 80 | 0.0032 |
| 128 | 0.0037 | | 122 | 0.0030 |
| 168 | 0.0034 | | 170 | 0.0032 |
| 208 | 0.0043 | | 214 | 0.0039 |
| 250 | 0.0041 | | 258 | 0.0030 |
| 298 | 0.0040 | | 290 | 0.0036 |
| 342 | 0.0044 | | 331 | 0.0030 |
| 386 | 0.0039 | | 371 | -0.0001 |
| 418 | 0.0045 | | 417 | 0.0001 |
| 459 | 0.0042 | | 460 | -0.0031 |
| 495 | 0.0043 | | 514 | -0.0107 |
| 541 | 0.0044 | | 562 | -0.0147 |
| 584 | 0.0034 | | 606 | -0.0372 |
| 638 | 0.0032 | | 652 | -0.0442 |
| 686 | 0.0030 | | 700 | -0.0627 |
| 730 | 0.0012 | | | |
| 776 | 0.0002 | | | |
| 824 | -0.0011 | | | |

## Claims

1. A high pressure turbine component (10) for use in a gas turbine engine comprising:
a gas turbine engine turbine component (10); and
an amorphous phosphate-containing coating (52) disposed on a surface (26) of the component (10); and
wherein the coating has a thickness of from about 0.10 microns to about 10 microns and provides resistance to oxidation and hot corrosion at temperature greater than about 1000 °F.

2. The component (10) of claim 1, wherein the amorphous phosphate-containing coating (52) comprises aluminophosphate compounds.

3. The component of claim 1 or claim 2, wherein the amorphous phosphate-containing coating (52) has an oxygen diffusivity of less than about 1 x 10⁻¹² cm²/sec.

4. The component of any preceding claim 1, wherein the amorphous phosphate coating (52) contains at least 50 percent by weight of an amorphous content

5. The component of any preceding claim, wherein the component is selected from high pressure turbine components (10) selected from the group consisting of a turbine disk, a seal, a turbine blade, a turbine vane, a turbine shroud and combinations thereof.

6. The component of any preceding claim, wherein the coating (52) is disposed on an inner surface of a turbine blade airfoil.

7. The component (10) of any preceding claim, wherein the component (10) includes a surface comprising a base coating (54) onto which the amorphous phosphate-containing coating (52) has been applied.

8. The component of claim 7, wherein the base coating (54) is selected from the group consisting of diffusion aluminide, noble metal modified diffusion aluminide, overlay aluminide, thermal barrier coatings and combinations thereof.

9. The component of claim 7, wherein the component (10) further includes a thermal barrier coating intermediate to the amorphous phosphate-containing coating and the base coating.

10. The component of claim 1, wherein the thickness of the amorphous phosphate-containing coating (52) is about 1 micron.
